# EUROPÄISCHE PATENTSCHRIFT

(11) **EP 0 568 784 B1**
(45) Veröffentlichungstag und Bekanntmachung des Hinweises auf die Patenterteilung: **20.11.1996**
(21) Anmeldenummer: 93103445.8
(22) Anmeldetag: 04.03.1993
(51) Int. Cl.: H01M 8/02, C25B 9/04, C25B 9/00

(54) **Zellaufbau für Elektrolyseure und Brennstoffzellen**
Cell construction for electrolyzers and fuel cells
Construction de cellule pour électrolyseurs et cellules à combustible

(30) Priorität: 13.03.1992 DE 4208057
(43) Veröffentlichungstag der Anmeldung: 10.11.1993
(73) Patentinhaber: MTU MOTOREN- UND TURBINEN-UNION FRIEDRICHSHAFEN GMBH, D-88040 Friedrichshafen (DE)
(72) Erfinder: Brand, Rolf A., W-8012 Ottobrunn (DE); Hofmann, Hans, Dr., W-6052 Mühlheim 3 (DE); Hildebrandt, Jürgen, Dr., W-8000 München 82 (DE)
(74) Vertreter: Winter, Josef

(56) Entgegenhaltungen:
- EP-A- 0 172 495
- EP-A- 0 182 114
- BE-A- 649 413
- DE-A- 4 120 359

## Beschreibung

Die Erfindung betrifft einen Zellaufbau für eine Mehrzahl von elektrisch und geometrisch in Reihe geschaltete Zellen aufweisende Elektrolyseure und Brennstoffzellen, insbesondere zur Entwicklung von oder für den Betrieb mit Wasserstoff und Sauerstoff, gemäß dem Oberbegriff des Patentanspruches 1.

Die charakteristischen Elemente solcher Zellen sind das zentrale Diaphragma, die Elektroden beiderseits des Diaphragmas, die bipolaren Zelltrennwände sowie elastisch nachgiebige Abstandshalter zwischen den Elektroden und den Zelltrennwänden, abgesehen von dem im vorliegenden Zusammenhang weniger interessanten Zellrahmen. Nicht zuletzt die Verhältnisse in den Grenzflächen benachbarter Elemente, d.h. die mechanische Verbindung, die elektrische Kontaktierung, mögliche Relativbewegungen, strömungsmechanische Übergänge, Ansatzstellen für Korrosion etc. sind von großer Bedeutung für die elektrochemischen und mechanischen Eigenschaften der Zelle und somit des Elektrolyseurs bzw. der Brennstoffzelle, wobei insbesondere Wirkungsgrad und Lebensdauer beeinflußt werden. Mit dem Ziel eines mechanisch/konstruktiv möglichst einfachen, stabilen und dauerhaften Aufbaus bei möglichst kleinen Zellspannungen für eine vorgegebene Stromdichte geht die Tendenz zur sogenannten Zero-Gap-Anordnung, bei welcher die Elektroden ohne Spalt und ohne irgendwelche Abstandshalter unmittelbar am Diaphragma anliegen.

Das Diaphragma kann nach Art der DE-OS 32 24 556 aus einem mit Oxidkeramik beschichteten Metallnetz bestehen, wodurch sich relativ gute Festigkeitseigenschaften erzielen lassen.

Die Elektroden können nach Art der DE-PS 37 43 354 aus porös beschichteten, katalytisch aktivierbaren Lochblechen, Metallnetzen oder Streckmetallelementen bestehen.

Bei der Kombination solcher Elektroden-Einheiten mit einem metallnetzgestützten Diaphragma besteht u.U. die Gefahr, daß durch Reibungsvorgänge, durch örtliche Überlastung bzw. durch korrosive Vorgänge das Metallnetz im Diaphragma stellenweise freigelegt wird, was zu einem Kurzschluß der Elektroden führen kann.

Die auf absehbare Zeit beste Lösung für eine Zero-Gap-Konfiguration scheint das Zusammenfassen der Elektroden mit dem Diaphragma zu einer integralen Einheit (EDE-Platte = Elektrode-Diaphragma-Elektrode-Platte) zu sein, wobei das Diaphragma ungestützt, d.h. ohne innere Metallnetze etc., ausgeführt werden kann. Die Verbindung der drei Funktionselemente erfolgt bereits bei deren Herstellung. Das Diaphragma entsteht aus einem keramischen Rohling, auf welchen die Elektroden in Pulver- bzw. Pastenform durch Sintern bzw. reduktives Sintern aufgebracht werden. Mit der Herstellung solcher EDE-Einheiten befassen sich die DE-OS 32 24 555 sowie die zugehörigen europäischen Offenlegungsschriften 0 297 315 und 0 297 316.

Bei derartigen EDE-Verbunden übernehmen quasi die Elektroden die Abstützung des dazwischenliegenden Diaphragmas. In Versuchen hat sich gezeigt, daß sich mit solchen EDE-Platten hohe Stromdichten bei niedrigen Zellspannungen und bei mäßigen Zelltemperaturen erzielen lassen.

In den u.a. für die Elektrolytspeicherung erforderlichen Räumen zwischen den Elektroden der EDE-Platte und den bipolaren Zelltrennwänden, d.h. in den Anoden- und Kathodenräumen, sind elektrisch leitende Abstandshalter angeordnet, welche die jeweilige EDE-Platte kontaktieren und zentrieren. Bevorzugt werden federnd nachgiebige Elemente wie z.B. Wellbleche, Blechstreifen oder Metallwolle. Es ist auch möglich, die Abstandshalter in die Zelltrennwände einzuformen, beispielsweise als nach beiden Seiten axial vorstehende Noppen. Eine solche Ausführung ist in der EP-OS 0 340 820 gezeigt, allerdings nicht für eine Zero-Gap-Anordnung sondern für eine Micro-Gap-Anordnung mit einem geringen Abstand zwischen Elektroden und Diaphragma, welcher durch zusätzliche, nichtleitende Abstandshalter in den Elektroden erzeugt wird.

Eine weitere bekannte Elektrodenbauart, welche in Zero-Gap-Anordnungen untersucht wurde ohne jedoch eine Einheit mit dem Diaphragma zu bilden, besteht aus einer Lamellenstruktur in Form einer Vielzahl von vertikal und senkrecht zum Diaphragma in geringem Abstand zueinander angeordneten, geraden Blechstreifen mit dazwischenliegenden Abstandshaltern. Die zickzackförmigen Abstandshalter sind ebenfalls aus Blechstreifen hergestellt und liegen unter Vorspannung zwischen den geraden Blechstreifen. Die Abstandshalter sind so angeordnet, daß sie mit ihrer zickzackförmigen Stirnkante das Diaphragma über die ganze Elektrodenhöhe berühren. Der Abstand zwischen den geraden Blechstreifen ist so bemessen, daß bei möglichst kleiner Schichtenzahl noch eine ausreichende Förderwirkung auf Fluide, wie den Elektrolyten, erzielt wird. Aufgrund der Abstandshalteranordnung verläuft die Hauptförderrichtung horizontal und senkrecht zum Diaphragma. Durch die Berührungsverhältnisse zwischen den Teilen ist jedoch auch eine vertikale Strömungsbewegung des Elektrolyten bzw. des erzeugten oder zugeführten Gases möglich. Außerdem kann im Falle der Elektrolyse das erzeugte Gas in dem von Abstandshaltern zwischen Elektrode und Zelltrennwand freigehaltenen Anoden- bzw. Kathodenraum weitgehend ungehindert vertikal nach oben aufsteigen. Ein gewisser Nachteil dieser Elektrodenart ist der filigrane, aufwendige Aufbau.

Versuche mit solchen Elektroden haben ergeben, daß diese bei vorgegebenen Stromdichten anderen Zero-Gap-Anordnungen mit porösen Elektroden, insbesondere der EDE-Einheit, insofern unterlegen sind, als sie höhere Zellspannungen erfordern. Ein Vorteil ist in dem relativ intensiven Stofftransport durch die Förderwirkung (Elektrolytumwälzung, Gastransport) in den Lamellenzwischenräumen zu sehen.

Aus der DE 41 20 359 A1 geht eine Elektrolysezelle mit bipolaren Elementen in Form von Verbundplatten als bekannt hervor. Die Verbundplatten bestehen aus einem beidseitig mit einer Elektrodenschicht versehenen Diaphragma. Die Elektroden sind jeweils durch ein federnd nachgiebiges, vorzugsweise ein gewelltes Nickeldrahtgewebe mit Tennwänden aus Nickelblech verbunden, die jeweils zwischen einer Anode der einen Verbundplatte und einer Kathode der benachbarten Verbundplatte liegen. Das Drahtgewebe ist an den Berührungsstellen mit der Anode und an den Berührungsstellen mit der Trennwand durch eine Metallschicht fest verbunden. Im Kathodenraum ist das Drahtgewebe an die Kathodenschicht und die Trennwand lediglich angedrückt.

Angesichts dieser bekannten Lösungen besteht die Aufgabe der Erfindung darin, einen Zellaufbau für Elektrolyseure und Brennstoffzellen anzugeben, welcher ausgehend vom Prinzip der Zero-Gap-Anordnung einen noch höheren Wirkungsgrad, günstigere Betriebsbedingungen und eine höhere Lebensdauer ermöglicht.

Diese Aufgabe wird durch die im Anspruch 1 gekennzeichnete Kombination von im einzelnen zum Teil bekannten Merkmalen gelöst.

Die Erfindung ist darin zu sehen, daß eine Zero-Gap-Anordnung mit plattenförmigem Diaphragma und elektrolytdurchlässigen Elektroden beidseitig mit einer den Elektrodenraum zumindest teilweise auffüllenden, an der Elektrode anliegenden Lamellenstruktur kombiniert wird. Die Lamellenstrukturen bestehen aus einer Vielzahl von identisch aufgebauten Schichten mit im wesentlichen axial (senkrecht zur Diaphragmaebene) und vertikal ausgerichteten Wandelementen und mit Abstandshaltern zwischen den Wandelementen. Die Wandelemente sind als gerade ebene Blechstreifen ausgeführt, die Abstandshalter als regelmäßig verformte, z. B. zickzack-, mäander- oder sinusförmig gebogene Metallnetzstreifen und/oder Blechstreifen. Die Wandelemente oder die Wandelemente und die Abstandshalter bestehen im Kathodenraum aus amorphem Nickel, im Anodenraum aus einer amorphen Nickel-Kobalt-Legierung. Die Lamellenstruktur hat dabei mehrere Funktionen. Sie dient als mechanischer Abstandshalter, d. h. als federelastische Abstützung von Elektroden und Diaphragma mit optimaler Krafteinleitung bzw. -verteilung. Sie bildet das elektrische Verbindungsglied zwischen Elektrode und Zelltrennwand mit günstiger Stromverteilung und Kontaktierung und sie begünstigt die Elektrolytumwälzung und den Gastransport durch ihre Förderwirkung.

Versuche mit solchen Kombinationen aus Zero-Gap-Anordnung und Lamellenstruktur als Elektrolyseur haben zu dem überraschenden Ergebnis geführt, daß, gegenüber bekannten EDE-Einheiten mit Abstandshaltern, vorgegebene Stromdichten und Gaserzeugungsraten mit noch kleineren Zellspannungen bei wesentlich geringeren Zelltemperaturen erreicht werden. Anders ausgedrückt ermöglicht die Erfindung eine Reduzierung des elektrischen oder chemischen Energiebedarfes sowie eine Verbesserung der Betriebsbedingungen insgesamt, was sich in vielerlei Hinsicht positiv auswirkt.

Die bipolaren Zellentrennwände können - bei einer Ausführung ohne zusätzliche Abstandshalter - besonders einfach und kostengünstig als ebene Platten aus Metallblech ausgeführt werden.

Die Unteransprüche 2 bis 6 enthalten bevorzugte Ausgestaltungen des Zellaufbaus nach Anspruch 1.

Die Erfindung wird anschließend anhand der Zeichnungen am Beispiel eines Elektrolyseurs noch näher erläutert. Diese zeigen in vereinfachter, nicht maßstäblicher Darstellung:
- Fig. 1: einen perspektivischen Ausschnitt aus einem Zellaufbau mit i.w. vertikaler Strömungsrichtung,
- Fig. 2: einen perspektivischen Ausschnitt aus einer Lamellenstruktur mit i.w. horizontaler Orientierung,
- Fig. 3: eine perspektivische Ansicht zweier Abstandshalter mit unterschiedlich angeordneten Durchbrüchen.

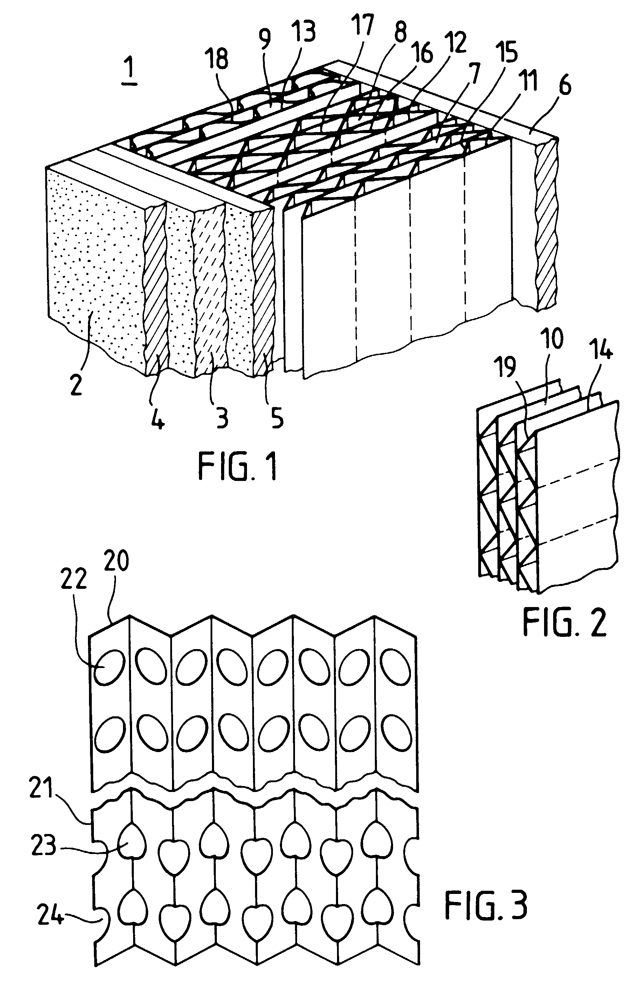

In der perspektivischen Darstellung des ausschnittsweise wiedergegebenen Zellaufbaus 1 in Fig. 1 verläuft die Zellängsrichtung von links vorne nach rechts hinten, die Zellquerrichtung entsprechend von links hinten nach rechts vorne. Der Einfachheit halber ist nur ein Elektrodenraum, d.h. entweder der Anoden- oder der Kathodenraum, gezeigt, wobei drei beispielhafte Ausführungen der Lamellenstruktur zu erkennen sind.

Als erstes Element des Zellaufbaus 1 ist links vorne in Fig. 1 die dem nächsten, nicht mehr gezeigten Elektrodenraum zugehörige, elektrolytdurchlässige Elektrode 4 zu sehen. Auf diese folgen in Zero-Gap-Anordnung das Diaphragma 3 und die zweite Elektrode 5, wobei die drei Elemente 3, 4 und 5 entsprechend dem neuesten Stand der Technik zu einer integralen EDE-Platte 2 vereinigt sein sollen. Die poröse, elektrolytdurchlässige Struktur der EDE-Platte 2 ist durch die Punktierung der Oberflächen ihrer drei Schichten angedeutet.

Am rechten hinteren Ende des Zellaufbaus 1 ist die ggf. an die nächste, nicht dargestellte Zelle angrenzende Zelltrennwand 6 zu erkennen, welche als einfache, ebene, undurchlässige Blechplatte ausgeführt ist.

Besonders zu beachten sind die den Elektrodenraum zwischen Elektrode 5 und Zelltrennwand 6 im vorliegenden Beispiel vollständig füllenden Elemente, welche die Lamellenstruktur bilden. Um beispielhaft mehrere mögliche Ausführungen zu zeigen, sind von rechts vorne nach links hinten drei verschiedene Lamellenstrukturen 7, 8 und 9 wiedergegeben. Diese unterscheiden sich nur durch die Form bzw. durch die Ausrichtung ihrer Abstandshalter und weisen als gemeinsames Merkmal eine vertikale Hauptströmungsrichtung auf. Bei tatsächlichen Ausführungen wird man in der Regel nur einen einzigen Lamellenstruktur-Typ je Elektrodenraum bzw. je Zelle verwenden.

Die als vorderste gezeigte Lamellenstruktur 7 besteht aus i.w. vertikal und axial sowie in geringem Abstand parallel zueinander angeordneten Wandelementen 11 sowie aus zickzackförmigen, mit gewisser Vorspannung zwischen die Wandelemente 11 eingelegten Abstandshaltern 15. Die Wandelemente 11 bestehen aus ebenen, geraden Blechstreifen, die Abstandshalter 15 sind ebenfalls aus Blechstreifen hergestellt und alle in identischer Weise angeordnet, so daß ein Muster aus parallelverschobenen Zickzacklinien entsteht. Eine solche Anordnung ist vom Aufbau her relativ einfach und weist eine relativ große elastische Nachgiebigkeit quer zur Zellängsrichtung auf.

Als Blechmaterial wird für die Wandelemente 11 oder für alle Elemente amorphes Metall verwendet, vorzugsweise Nickel oder eine Nickel-Kobalt-Legierung. Amorphe Metalle sind besonders korrosionsfest, besitzen eine sehr glatte Oberfläche und weisen einen hohen E-Modul sowie eine hohe Streckgrenze auf, wodurch sie sich auch bei größeren Verformungen noch elastisch verhalten. Dabei beträgt die Blechdicke nur ca. 30 bis 40 µm. Die Blechstreifen für die Wandelemente sind bis etwa 1 m lang (Zellhöhe), ca. 5 bis 6 mm breit (axiale Zelltiefe) und weisen zueinander einen Abstand von ca. 0,2 bis 0,8 mm auf. Durch die Darstellung in Fig. 1 könnte der Eindruck entstehen, daß die Lamellenstrukturen 7, 8 und 9 ausschließlich in vertikaler Richtung fluiddurchlässig wären. Wie bereits erwähnt, ist jedoch auch eine axiale Elektrolyt- und Gasdurchlässigkeit erforderlich. In Wirklichkeit ist es so, daß die Abstandshalter, selbst wenn sie aus ungelochten Blechstreifen bestehen, z.B. aufgrund von Formfehlern nicht über die gesamte Länge ihrer Kanten bzw. ihrer Berge und Täler dichtend an den Wandelementen anliegen, so daß bei allen Anordnungen nach Fig. 1 eine gewisse Zahl von kleinen axialen die Lamellenstruktur 10 der vordersten Lamellenstruktur 7 nach Fig. 1 mit dem Unterschied, daß die Zickzackmuster der Abstandshalter 19 vertikal verlaufen. Somit bilden die Abstandshalter 19 mit den Wandelementen 14 eine Vielzahl von horizontal (axial) und lotrecht zur angrenzenden Elektrode verlaufenden Förderkanälen.

Bezüglich der ebenfalls erforderlichen, vertikalen Fluiddurchlässigkeit der Lamellenstruktur 10 gelten die Aussagen zu Fig. 1 hinsichtlich der axialen Fluiddurchlässigkeit der dort gezeigten Lamellenstrukturen entsprechend.

Ein gewisser Vorteil der Lamellenstruktur 10 gegenüber den Strukturen nach Fig. 1 ist in der größeren elektrischen Kontaktfläche zur Elektrode und zur Zelltrennwand hin zu sehen, bedingt durch die ebenfalls kontaktierenden Stirnkanten der Abstandshalter 19. Selbstverständlich sind auch hier alternativ zur Zickzackform andere Abstandshalterformen (Wellenlinie etc.) sowie andere Ausführungen (z.B. Metallnetz) möglich.

Die Entscheidung darüber, ob einer vertikalen Hauptströmungsrichtung (Fig. 1) oder einer axial/horizontalen (Fig. 2) der Vorzug zu geben ist, kann voraussichtlich erst nach entsprechenden Versuchen getroffen werden. Möglicherweise haben beide Anordnungen ihre Berechtigung.

Fig. 3 schließlich zeigt perspektivische Ansichten zweier zickzackförmiger Abstandshalter 20 und 21 mit Durchbrüchen 22 und 23 bzw. mit Randausnehmungen 24. Die Durchbrüche und Randausnehmungen haben - wie schon erwähnt - die Aufgabe, den Fluidtransport quer zur - in Fig. 3 vertikalen - Hauptströmungsrichtung zu erhöhen. Beim oberen Abstandshalter 20 liegen die kreisförmigen, in der Perspektive elliptischen Durchbrüche 22 in den ebenen Flächenabschnitten.

Beim unteren Abstandshalter 21 liegen die kreisförmigen, in der Perspektive herzförmigen Durchbrüche 23 im Bereich der Knickstellen, was das Biegen der Blechstreifen erleichtern kann. Zusätzlich sind halbkreisförmige Randausnehmungen 24 an der linken und rechten Stirnkante vorhanden.

Durchtrittsmöglichkeiten vorhanden ist. Falls dies nicht ausreicht, besteht natürlich die Möglichkeit, die Abstandshalter - wie in Fig. 3 gezeigt - gezielt mit Durchbrüchen zu versehen.

Die mittlere Lamellenstruktur 8 in Fig. 1 unterscheidet sich von der vorderen dadurch, daß die Abstandshalter 16 und 17 paarweise spiegelsymmetrisch zwischen den Wandelementen 12 angeordnet sind, so daß - in der Draufsicht - ein Netzmuster entsteht. Diese Anordnung läßt in Zellquerrichtung eine höhere Steifigkeit erwarten.

Angesichts der Feinheit dieser Strukturen wird es in Wirklichkeit zugegebenermaßen so sein, daß aufgrund von Form- und Lagefehlern der Elemente die geometrischen Verhältnisse wesentlich ungenauer sein werden als in den Figuren dargestellt. Dies hat jedoch keinerlei Abweichung vom Prinzip der Erfindung zur Folge.

Die hinterste Lamellenstruktur 9 in Fig. 1 weist wellenförmige Abstandshalter 18 zwischen den Wandelementen 13 auf. Eine solche Wellenform mit weichen Rundungen ist günstiger für die mechanischen Eigenschaften der Abstandshalter, insbesondere senkt sie die Bruchgefahr durch Kerbwirkung. Möglicherweise lassen sich besonders spröde amorphe Metalle ausschließlich in dieser oder ähnlicher Weise verformen.

Selbstverständlich gibt es noch weitere mögliche Abstandshalterformen, z.B. burgzinnen- oder trapezartige, welche sich durch einfache Biegevorgänge aus Blechstreifen erzeugen lassen. Ebenso ist es möglich, die Abstandshalter aus geraden oder regelmäßig verformten Metallnetzstreifen mit räumlicher Durchlässigkeit herzustellen.

Fig. 2 zeigt einen perspektivischen Ausschnitt aus einer Lamellenstruktur 10 mit im wesentlichen axialer, d.h. horizontaler, Strömungsrichtung. Im eingebauten Zustand würde die nach links vorne weisende Stirnseite dieser Struktur unmittelbar an der zu kontaktierenden, elektrolytdurchlässigen Elektrode der EDE-Einheit anliegen. Vom Aufbau her gleicht Auch die Ausführungen nach Fig. 3 sind nur beispielhaft, natürlich sind auch andere Durchbruchsformen und -konfigurationen möglich, auch in Verbindung mit gewellten oder anders geformten Abstandshaltern. Bei der Verwendung von Metallnetzstreifen erübrigt sich die gesonderte Herstellung von Durchbrüchen.

Die vorteilhaften Auswirkungen der Erfindung werden auch aus den nachfolgenden Angaben deutlich. Ein erfindungsgemäßer Zellaufbau mit beidseitig katalytisch aktivierter EDE-Platte und mit je einer anodischen und kathodischen Lamellenstruktur aus amorphem Metall läßt eine Zellspannung von unter 1,5 V bei einer Stromdichte von 5 kA/m² bzw. eine Zellspannung von ca. 1,6 V bei einer Stromdichte von 10 kA/m² erwarten, wobei die Zelltemperatur nur ca. 80° C beträgt, und die Zelle drucklos betrieben werden kann.

Annähernd vergleichbare Spannungs- und Stromdichtewerte lassen sich mit einer EDE-Einheit ohne Lamellenstruktur nur bei Zelltemperaturen von 120 bis 150° C sowie unter Druck erreichen.

Ein weiterer Vorteil der Erfindung besteht in der Möglichkeit, die Zellen als Gasliftzellen zu betreiben, wobei sie nur zu einem geringen Teil ihrer Höhe, z.B. zu 10 %, mit Elektrolyt gefüllt werden, und der Mammutpumpeneffekt der erzeugten Gase in den Lamellenzwischenräumen den Elektrolyten über die Zellfläche verteilt. Dieses Gaslift-Prinzip erlaubt einen Betrieb ohne Elektrolytumwälzpumpe und ist besonders für kleine bis mittlere Zellgrößen interessant.

Die Gas-/Elektrolyttrennung erfolgt dabei im oberen Teil der Zelle jeweils in einem Freiraum, welcher nicht mit der Lamellenstruktur ausgefüllt ist. Dies macht auch getrennte Separatoren und Kreislaufrohrleitungen überflüssig. Für den Rücklauf des ständig in der Lamellenstruktur nach oben und zur Zelltrennwand hin geförderten Elektrolyten in den Elektrolytsumpf ist mindestens ein gewisser Freiraum als Strömungsquerschnitt ohne Förderwirkung vorgesehen. Dieser kann axial zwischen Lamellenstruktur und Zelltrennwand und/oder seitlich zwischen Lamellenstruktur und Zellrahmen angeordnet sein und wird durch geeignete, die vertikale Durchströmung möglichst wenig störende Abstandshalter freigehalten. Im ersteren Fall, d.h. bei axialer Anordnung des Freiraumes an der bipolaren Zelltrennwand, können die Abstandshalter an der Zelltrennwand befestigt oder integral in diese eingeformt sein, z.B. als beidseitig axial vorstehende Noppen. Neben der mechanischen Abstützung übernehmen die Abstandshalter dabei auch die elektrische Kontaktierung. Beim Gaslift-Prinzip ist davon auszugehen, daß der volumetrische Anteil der Lamellenstruktur am Elektrodenraum mindestens etwa 20 % beträgt.

Die vorliegende Erfindung ist uneingeschränkt auch auf Brennstoffzellen anwendbar. Dabei ist nur zu beachten, daß die Elektroden auf ihren vom Diaphragma abgewandten Seiten hydrophobe Oberflächen aufweisen müssen, um eine effektive Gaspenetration in die Elektroden zu ermöglichen. Dies wird am besten durch eine Beschichtung auf der Basis von PTFE erreicht. Auch hier fördern die Lamellenstrukturen den Transport und die Verteilung des Brennstoff- bzw. Oxidatorgases.

## Patentansprüche

1. Zellaufbau für eine Mehrzahl von elektrisch und geometrisch in Reihe geschaltete Zellen aufweisende Elektrolyseure und Brennstoffzellen, insbesondere zur Entwicklung von oder für den Betrieb mit Wasserstoff und Sauerstoff, mit einem die Zelle in einen Anodenraum und einen Kathodenraum aufteilenden, als Gasseparator wirkenden, elektrolytdurchlässigen Diaphragma, mit je einer metallischen, elektrolytdurchlässigen Elektrode auf beiden Seiten des Diaphragmas, mit je einer die Zelle von benachbarten Zellen räumlich abgrenzenden, gasdichten, elektrisch leitenden, bipolaren Zelltrennwand, mit je einer gas- und elektrolytdurchlässigen, elektrisch leitenden, begrenzt elastisch verformbaren, als Abstandshalter und Stromzuführung wirkenden Struktur zwischen jeder Elektrode und jeder bipolaren Zelltrennwand, sowie mit einer die Zelle umfangsseitig umschließenden Rahmenkonstruktion, gekennzeichnet durch die Kombination folgender, im einzelnen zum Teil bekannter Merkmale:
A. Das Diaphragma (3) ist als ebene Platte ausgeführt.
B. Die Elektroden (4, 5) sind als schichtartige, mit mikroskopischen oder mit mikroskopischen und makroskopischen Durchbrüchen versehene Elemente ausgeführt und liegen unmittelbar am Diaphragma (3) an oder sind integral damit verbunden (EDE-Platte 2).
C. Die bipolaren Zelltrennwände (6) bestehen aus Metallblech und sind glattflächig oder mit aufgesetzten und/oder eingeformten Abstandshaltern versehen ausgeführt.
D. Die Räume zwischen den Elektroden (4, 5) und den bipolaren Zelltrennwänden (6), d. h. die Anoden- und Kathodenräume, sind teilweise oder vollständig mit Lamellenstrukturen (7 bis 10) ausgefüllt, welche zumindest in axialer Richtung, d. h. senkrecht zur Diaphragmaebene, und in vertikaler Richtung elektrolyt- und gasdurchlässig sind und welche unmittelbar an die Elektroden (4, 5) angrenzen.
Die Lamellenstrukturen (7 bis 10) bestehen jeweils aus einer Vielzahl von identisch aufgebauten Schichten mit im wesentlichen axial und vertikal ausgerichteten, in geringem Abstand zueinander angeordneten Wandelelmenten (11 bis 14) und mit Abstandshaltern (15 bis 21) zwischen den Wandelelementen (11 bis 14).
Die Wandelelemente (11 bis 14) der Lamellenstrukturen (7 bis 10) sind als gerade, ebene Blechstreifen ausgeführt, die Abstandshalter (15 bis 21) der Lamellenstrukturen (7 bis 10) sind als regelmäßig verformte, z. B. zickzack-, mäander- oder sinusförmig gebogene Metallstreifen und/oder Blechstreifen ausgeführt, wobei letztere mit Durchbrüchen (22, 23) und/oder Randausnehmungen (24) versehen sein können, und die Wandelemente (11 bis 14) oder die Wandelemente und die Abstandshalter (15 bis 21) bestehen im Kathodenraum aus amorphem Nickel, im Anodenraum aus einer amorphen Nickel-Kobalt-Legierung.

2. Zellaufbau nach Anspruch 1, dadurch gekennzeichnet, daß das Diaphragma (3) und die zu dessen beiden Seiten angeordneten Elektroden (4, 5) zu einer integralen Einheit (EDE-Platte 2) verbunden sind.

3. Zellaufbau nach Anspruch 1, dadurch gekennzeichnet, daß die zu beiden Seiten des Diaphragmas (3) angeordneten Elektroden (4, 5) mit den Lamellenstrukturen (7 bis 10) integral und elektrisch leitend verbunden sind.

4. Zellaufbau nach einem oder mehreren der Ansprüche 1 bis 3, dadurch gekennzeichnet, daß zumindest die vom Diaphragma (3) abgewandten Oberflächen der Elektroden (4, 5) katalytisch aktiviert sind.

5. Zellaufbau nach einem oder mehreren der Ansprüche 1 bis 4, hauptsächlich für kleine bis mittlere Elektrolyseurzellen, dadurch gekennzeichnet, daß jede Zelle als sog. Gaslift-Zelle ohne Elektrolyt-Umwälzpumpe ausgeführt und vor Betrieb nur zu einem geringen Teil ihrer Höhe, vorzugsweise etwa zu 10 %, mit Elektrolyt befüllt ist, und daß axial zwischen der Lamellenstruktur und der Zelltrennwand und/oder seitlich zwischen der Lamellenstruktur und dem Zellrahmen mindestens ein vertikal durchlässiger, größerer Strömungsquerschnitt für den Rücklauf des Elektrolyten vorhanden ist.

6. Zellaufbau nach einem oder mehreren der Ansprüche 1 bis 3 und 5, für Brennstoffzellen, dadurch gekennzeichnet, daß die vom Diaphragma abgewandten Seiten der Elektroden hydrophob beschichtet sind, vorzugweise mit einem Material auf der Basis von Polytetrafluorethylen.

## Claims

1. Cell construction for a plurality of electrolyzers and fuel cells exhibiting electrically and geometrically series-connectcd cells, particularly for the development of or for operation with hydrogen and oxygen, with a diaphragm permeable to electrolyte, dividing the cell into an anode chamber and a cathode chamber and acting as a gas separator, with a metallic electrolyte-permeable electrode on both sides of the diaphragm, with a gastight electrically-conducting bipolar cell partition spatially demarcating each cell from adjoining cells, with a gas-permeable and electrolyte-permeable electrically conducting structure between each electrode and each bipolar cell partition, said structure being elastically deformable to a limited extent and acting as a spacer and current-conductor, and with a frame construction, embracing the cell round its periphery, characterised by the combination of the following features, which are to some extent known individually:
A. The diaphragm (3) is executed as a flat plate.
B. The electrodes (4, 5) are executed as laminar elements provided with microscopic or microscopic and macroscopic openings and rest directly against the diaphragm (3) or are integrally connected therewith (EDE [electrode/diaphragm/electrode] plate 2).
C. The bipolar cell partitions (6) are made from sheet metal and are executed with a smooth surface or with spacers mounted thereon and/or formed therein.
D. The spaces between the electrodes (4, 5) and the bipolar cell partitions (6), i.e. the anode and cathode chambers, are partly or completely filled with lamellar structures (7 to 10) which are permeable to electrolyte and gas at least in an axial direction, i.e. perpendicular to the plane of the diaphragm, and in a vertical direction, and which are immediately, adjacent to the electrodes (4, 5).
The lamellar structures (7 to 10) consist of a multiplicity of layers of identical construction. with wall elements (11 to 14) aligned essentially axially and vertically and arranged a small distance apart, and with spacers (15 to 21) between the wall elements (11 to 14).
The wall elements (11 to 14) of the lamellar structures (7 to 10) are executed as straight flat sheet strips, the spacers (15 to 21) of the lamellar structures (7 to 10) are executed as regularly, deformed, e.g. zigzag, meander-shaped or sinusoidally bent metal strips and/or sheet strips, wherein the latter can be provided with openings (22, 23) and/or edge cut-outs (24), and the wall elements (11 to 14) or the wall elements and the spacers (15 to 21) consist in the cathode chamber of amorphous nickel, and in the anode chamber of an amorphous nickel/cobalt alloy.

2. Cell structure according to Claim 1, characterised in that the diaphragm (3) and the electrodes (4, 5) arranged on both sides thereof are connected together to form an integral unit (EDE plate 2).

3. Cell construction according to Claim 1, characterised in that the electrodes (4, 5) arranged on both sides of the diaphragm (3) are connected integrally and electrically conducting to the lamellar structures (7 to 10).

4. Cell construction according to one or more of Claims 1 to 3, characterised in that at least the surfaces of the electrodes (4, 5) facing away from the diaphragm (3) are catalytically activated.

5. Cell construction according to one or more of Claims 1 to 4, principally for small to medium-sized electrolyzer cells, characterised in that each cell is executed as a so-called "gas lift" cell without an electrolyte circulating pump, and prior to service is filled with electrolyte only up to a small fraction of its height, preferably up to about 10%, and that, axially between the lamellar structure and the cell partition and/or laterally between the lamellar structure and the cell frame, there is at least one vertically permeable greater flow cross-section for the return of the electrolyte.

6. Cell construction according to one or more of Claims 1 to 3 and 5, for fuel cells, characterised in that the sides of the electrodes facing away from the diaphragm are hydrophobically coated, preferably with a material with a polytetrafluoroethylene basis.

## Revendications

1. Construction de cellule pour une pluralité d'électrolyseurs et de piles à combustible présentant des cellules montées en série au point de vue électrique et géométrique, en particulier pour la formation d'hydrogène et d'oxygène, ou pour l'exploitation avec de l'hydrogène et de l'oxygène, comportant une paroi poreuse qui divise la cellule en un espace anodique et en un espace cathodique, qui agit comme séparateur de gaz, qui est perméable à l'électrolyte, comportant une électrode métallique, perméable à l'électrolyte, de chacun des deux côtés de la paroi poreuse, comportant une paroi de séparation des cellules, étanche au gaz, électriquement conductrice, bipolaire, séparant dans l'espace la cellule d'avec les cellules voisines, comportant, entre chaque électrode et chaque paroi bipolaire de séparation des cellules, une structure perméable au gaz et à l'électrolyte, électriquement conductrice, élastiquement déformable de façon limitée, agissant comme écarteur et comme conduite pour l'écoulement, et comportant aussi une construction de cadre qui enserre la cellule sur la périphérie, caractérisée par la combinaison des attributs suivants, en partie séparément connus:
A. La paroi poreuse (3) est réalisée sous forme d'une plaque plane.
B. Les électrodes (4, 5) sont réalisées sous forme d'éléments du type couche, munis de percement microscopiques ou de percements microscopiques et macroscopiques et s'appuient directement contre la paroi poreuse (3) ou lui sont solidairement reliées (plaque électode-paroi poreuse-électrode EDE 2).
C. Les parois bipolaires (6) de séparation des cellules sont constituées de tôle métallique et sont réalisées à surface lisse ou sont munies d'écarteurs rapportés et/ou venus de formage.
D. Les espaces situés entre les électrodes (4, 5) et les parois bipolaires (6) de séparation des électrodes, c'est-à-dire les espaces anodiques et cathodiques, sont partiellement ou complètement remplis de structure en lamelles (7 à 10) qui sont perméables à l'électrolyte et aux gaz, tout au moins selon la direction axiale, c'est-à-dire perpendiculairement au plan de la paroi poreuse, et selon la direction verticale, et qui sont directement adjacentes aux électrodes (4, 5).
Les structures en lamelles (7 à 10) sont chacune constituées d'une pluralité de couches de construction identique comportant des éléments de paroi (11 à 14) sensiblement orientés axialement et verticalement, disposés à faible distance les uns des autres, ainsi que d'écarteurs (15 à 21) entre les éléments de paroi (11 à 14).
Les éléments de paroi (11 à 14) des structures en lamelles (7 à 10) sont réalisés sous forme de rubans de tôle, rectilignes et plans, les écarteurs (15 à 21) des structures en lamelles (7 à 10) sont réalisés sous forme de rubans métalliques et/ou de rubans de tôle de forme régulière, par exemple pliés en zigzag, en méandre ou en sinus, ces derniers pouvant être munis de percements (22, 23) et/ou d'évidements de bordure (24) et les élément de paroi (11 à 14) ou les éléments de paroi et les écarteurs (15 à 21) sont constitués, dans l'espace cathodique, de nickel amorphe, dans l'espace anodique, d'un alliage nickel-cobalt amorphe.

2. Construction de cellule selon la revendication 1, caractérisée par le fait que la paroi poreuse (3) et les électrodes (4, 5) disposées des deux côtés de cette paroi sont réunies pour donner un ensemble solidaire (plaque électrode-paroi poreuse-électrode EDE 2).

3. Construction de cellule selon la revendication 1, caractérisée par le fait que les électrodes (4, 5) disposées des deux côtés de la paroi poreuse (3) sont réunies avec les structures en lamelles (7 à 10), solidairement et avec conduction électrique.

4. Construction de cellule selon une ou plusieurs des revendications 1 à 3, caractérisée par le fait qu'au moins les surfaces des électrodes (4, 5) opposées à la paroi poreuse (3) sont activées au point de vue catalytique.

5. Construction de cellule selon une ou plusieurs des revendications 1 à 4, principalement pour des cellules d'électrolyseur petites à moyennes, caractérisée par le fait que chaque cellule est réalisée sous forme d'une cellule dite gaslift/à extraction par le gaz, sans pompe de recyclage de l'électrolyte et, avant exploitation, n'est remplie d'électrolyte que sur une petite partie de sa hauteur, de préférence environ 10%, et que selon la direction axiale, entre la structure en lamelles et la paroi de séparation des cellules et/ou latéralement, entre la structure en lamelles et le cadre de la cellule, il y a au moins une section de passage assez grande, à passage vertical, pour le retour de l'électrolyte.

6. Construction de cellule selon une ou plusieurs des revendications 1 à 3 et 5, pour des piles à combustible, caractérisée par le fait que les faces des électrodes opposées à la paroi poreuse sont revêtues d'un matériau hydrophobe, de préférence d'un matériau à base de polytétrafluoroéthylène.
